# EUROPEAN PATENT APPLICATION

(11) **EP 0 800 855 A1**
(43) Date of publication of application: **15.10.1997**
(21) Application number: 97201065.6
(22) Date of filing: 10.04.1997
(51) Int. Cl.: B01D 53/86

(54) **Method for the catalytic oxidation of off-gases**

(30) Priority: 11.04.1996 NL 1002847
(71) Applicant: Sara Lee/DE N.V., 3532 AA Utrecht (NL)
(72) Inventor: Essens, Paulus Johannes Maria, 3524 JT Utrecht (NL); Wold, Willem Harm, 8502 BP Joure (NL)
(74) Representative: Smulders, Theodorus A.H.J., Ir.

(57) **Abstract**

The invention relates to a method for cleaning off-gases which contain organic nitrogen compounds, by catalytic combustion in the presence of excess molecular oxygen at elevated temperature, using two catalysts, wherein the off-gases are first passed through a catalyst bed with a metal oxide catalyst and then are passed through a catalyst bed with a noble metal catalyst, and wherein oxidizing conditions prevail in both catalyst beds.

## Description

In many production processes, for instance in the food processing industry, off-gases are released, in which often unacceptable amounts of environmentally harmful substances occur. A second problem is the odor nuisance caused by highly odorous off-gases.

In these cases, to limit environmental pollution and/or odor nuisance, a good off-gas cleaning is necessary. Widely used methods are, for instance, the removal of the components causing the nuisance with the aid of gas scrubbers or through adsorption to, for instance, activated carbon or zeolites. These methods have the disadvantage that the adsorbent with the removed substances yields a new kind of waste, which must be processed in turn.

Methods that break down the substances to be removed are therefore preferable from an environmental point of view. Examples of such methods are conversion over biofilters or compost filters, and after-burning. In after-burning, a distinction is made between thermal and catalytic after-burning. Which cleaning method is most suitable must be considered for each individual case, and is dependent on the process conditions such as the amount and temperature of the off-gas and the nature and amount of the substances to be removed. In cases where the off-gas stream is of medium size, with a fairly high temperature (75-200°C or higher), after-burning is mostly the most efficient method. In view of the considerably lower energy consumption, catalytic after-burning is generally more favorable than thermal after-burning.

In catalytic after-burning, the choice of the catalyst is extremely important for achieving an optimum cleaning at minimal cost. In general, for the purpose of off-gas cleaning by after-burning (so-called oxidative off-gas cleaning), two kinds of catalysts are used: noble metal and metal oxide catalysts.

Noble metal catalysts have a high activity, so that low emissions of organic material and carbon monoxide can be achieved with a small volume of catalyst. A disadvantage of noble metal catalysts is the high purchase price per volume unit. Of the noble metals, especially platinum and palladium, and to a lesser extent rhodium, are employed for oxidative gas cleaning.

Metal oxide catalysts are clearly less active than noble metal catalysts, so that, given the conventional loadings, a greater volume of catalyst must be used than with noble metal catalysts to achieve the same emission level of organic material. In that case, however, the emission of carbon monoxide is much higher than if noble metal catalysts are used. An advantage of metal oxide catalysts is their lower price per volume unit, which advantage, however, is (partly) annulled by the large volume of catalyst that is needed. As catalytically active components, especially the oxides of copper, manganese, tungsten, titanium, chromium, vanadium and iron are used.

In processes where materials which contain nitrogen-containing compounds are processed, such as the drying or roasting of vegetable materials such as coffee, the off-gases often contain nitrogen-containing organic compounds. When subjected to after-burning, these compounds can form a considerable amount of nitrogen oxides (NOₓ), which is undesirable from an environmental point of view. Experiments with off-gases from coffee roasters have shown that, surprisingly, the choice of the catalyst has a major influence on the formation of nitrogen oxides (given an equal conversion of organic compounds). While over noble metal catalysts the greater part (50 to 90%) of the nitrogen from the nitrogen-containing compounds is converted to nitrogen oxides, this proportion is considerably lower with metal oxide catalysts. This effect is further enhanced by the much lower operating temperature of metal oxide catalysts, so that the formation of nitrogen oxides is limited to virtually nil.

The object of the present invention is to clean off-gases to a lowest possible emission level of both organic material, carbon monoxide and nitrogen oxides, at the lowest possible costs. This object can be achieved by making optimum use of the advantages and disadvantages of the different types of catalysts.

As outlined hereinbefore, in most cases metal oxide catalysts form the cheapest alternative, though with a high emission of carbon monoxide resulting. The more expensive alternative of noble metal catalysts gives low emissions of organic material and carbon monoxide, but an unacceptable emission of nitrogen oxides. Lowering the nitrogen emission must then be effected with a downstream (catalytic) reduction unit, at high cost.

Accordingly, the object of the invention is to provide a method for the catalytic combustion of off-gases containing organic nitrogen compounds, in which the above-mentioned disadvantages do not occur or do so to a lesser extent. More particularly, it is an object to provide a method whereby an optimum balance between CO- and NOₓ-emission is obtained.

Thus the invention relates to a method for cleaning off-gases which contain organic nitrogen compounds, by catalytic combustion of the off-gases in the presence of excess molecular oxygen at elevated temperature, using two catalysts, wherein the off-gases are first passed through a catalyst bed with a metal oxide catalyst and then are passed through a catalyst bed with a noble metal catalyst, and wherein oxidizing conditions prevail in both catalyst beds.

Surprisingly, it has been found that with a combination of the two types of catalysts a low emission of all three components mentioned can be achieved, whereby in particular an optimum balance between the emissions of the three components is obtained.

To that end, the off-gas to be cleaned must first be passed over a metal oxide cacalyst, whereby the greater part of the organic material is converted with a minimal formation of nitrogen oxides from the nitrogen-containing components. In practice, it has been found that substantially no nitrogen oxides are formed. Then the partly cleaned off-gas is passed over a noble metal catalyst, whereby the remainder of the organic material and the carbon monoxide are converted. Because the greater part of the nitrogen in the nitrogen-containing organic components has already been converted to molecular nitrogen over the metal oxide catalyst, without formation of large amounts of nitrogen oxides, the formation of nitrogen oxides over the noble metal catalyst is slight. It is therefore not necessary to take special measures to counteract the formation of nitrogen oxides, or, as according to many publications, to even create reducing conditions in the second bed to reduce nitrogen oxides which have formed, to nitrogen.

A second advantage of such a two-stage catalyst is the low energy consumption. The optimum inlet temperature for the catalyst bed is about 250 450°C with metal oxide catalysts; about 300-500°C, by contrast, for noble metal catalysts. 'Inlet temperature' is understood to mean the temperature with which the off-gas to be cleaned enters the catalyst bed. As a result of the catalytic conversion of the organic compounds, heat is released in the catalyst, so that the temperature rises. Depending on the amount of compounds to be converted, such heat-up can run up to 100°C or more.

When a two-stage catalyst system is used, the inlet temperature can be tuned to the optimum operating temperature of the metal oxide catalyst, for instance 325°C. Over the first layer of catalyst the gas, given a sufficient conversion over this catalyst, is heated up to about 400°C, which is sufficient for a good action of the second layer of (noble metal) catalyst. The saving of energy thereby achieved obviously depends on the temperature of the off-gas to be cleaned. In the above-given example, given an off-gas temperature of 200°C, the energy saving compared with a single noble metal catalyst is about 35%. Given an off-gas temperature of 250°C, the saving is even about 50%.

The combustion takes place in the presence of an excess of molecular oxygen. In practice, the off-gas to be combusted will by origin already contain sufficient oxygen for the combustion of the components to CO₂, H₂O and N₂.

If desired, additional oxygen can be added, for instance in the form of air. A suitable amount of oxygen is a minimum of 100% excess over the stoichiometric conversion of the combustible components to CO₂, H₂O and N₂. The addition of additional oxygen can occur before the metal oxide catalyst, or before the noble metal catalyst. The latter, however, is not preferred because it entails the risk of additional NOₓ formation. It is noted that according to the invention oxidizing conditions are required in both catalyst beds.

It will be clear that the amount of each of the two types of catalyst must be selected with care. The amount of metal oxide catalyst must be so large that the amount of unreacted nitrogen-containing components in the partly cleaned off-gas is so low that no unacceptable amount of nitrogen oxides is formed over the noble metal catalyst. The amount of noble metal catalyst must be so large that the residual emissions of organic material and carbon monoxide are at an acceptable level. On the other hand, the volume of the two types of catalyst must be as small as possible in view of the investment in catalyst material and the volume of the after-burning unit.

In view of the differences in reactivity of different catalysts (also of the same type) and of different organic components, no general directions for the ratio of the amounts of catalyst can be given; the optimum catalyst configuration must therefore be separately determined for each case. In general terms, however, it can be indicated that the ratio of the volumes is between 1:9 and 9:1.

As catalytically active materials, preferably the metal oxides and noble metals mentioned in the introduction are used. The catalytically active materials to be used are generally applied to a support material. Suitable support materials are inter alia metal supports, ceramic oxides such as silica, alumina, titania and/or zirconia, various natural or synthetic clays, zeolites and the like. The content of catalytically active material that is present on the support is, for metal oxide catalysts, generally 0.5 to 50% by weight, calculated as metal oxide with respect to the weight of support and metal oxide together. For noble metal catalysts the content of metal is much lower. What usually suffices is 0.01 to 10% by weight of metal, with respect to the weight of the support and the catalytically active component together.

The catalysts to be used according to the invention are known per se and commercially available.

The type and the structure of the catalyst bed are not critical. These are substantially determined by the nature of the off-gases to be treated and any limitations regarding pressure drop and/or type of catalyst. Current systems are based on a fixed bed of catalyst particles, such as extrusions, granulate material, packings provided with a catalytic material and the like. It is also possible to use a whirling bed of catalyst particles.

A suitable form of catalyst bed is based on honeycomb or monolithic support materials, with a catalytically active material applied to the surface of the support material, optionally with a wash coat as intermediate layer.

The invention is presently elucidated in and by an example, which is not intended to be limitative.

### Example

Off-gases from a coffee roaster with a temperature of 200°C were heated to 330°C and then fed to a catalytic after-burning unit which was based on a metal oxide catalyst and a noble metal catalyst. The volume composition of the gases was substantially as follows:

| | |
|---|---|
| N₂: | 61.5% |
| O₂: | 8% |
| H₂O | 30% |
| Hydrocarbons | 0.5%, |
| of which organic nitrogen compounds: | 25% |

The off-gases were first fed to a catalyst bed based on a ceramic titania monolith (100 channels/inch², cpsi), having applied thereto vanadium pentoxide, copper oxide and tungsten oxide. The monolith had a free passage of about 70% and a specific surface area of about 1250 m²/m³.

As a result of the catalytic conversion, the gas temperature rose from 330° to 400°C. The gas coming from the first bed was then fed to a bed of a noble metal catalyst, 0.4% by weight of platinum on a sinusoidal stainless steel support provided with an alumina wash coat. The free passage of the bed was about 92%, while the specific surface area of the catalyst was about 1600 m²/m³.

The residual emission of carbon monoxide and nitrogen oxides in the gas coming from the second bed was determined and is included in the table. This table also includes the data for the conversion of the off-gas over a noble metal catalyst alone and over a metal oxide catalyst alone.

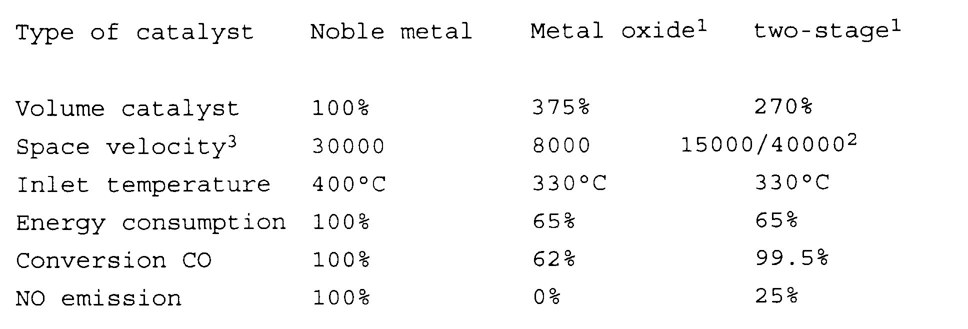

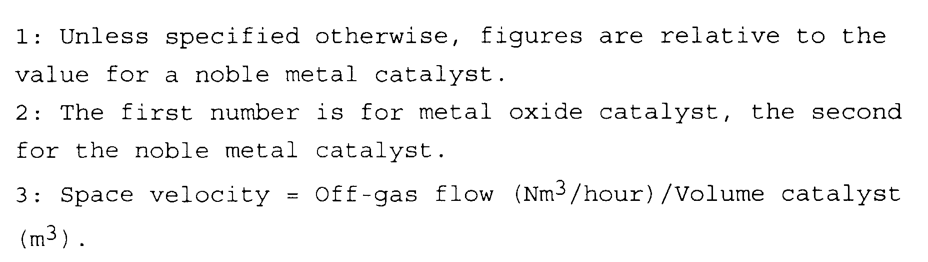

From the example it appears that with a two-stage catalyst according to the invention the emission of nitrogen oxides can be clearly reduced compared with the noble metal catalyst. A considerable saving of energy is achieved, owing to the lower inlet temperature.

Compared with the metal oxide catalyst, the emission of nitrogen oxides, true, is slightly higher, but the carbon monoxide emission in turn is clearly lower. The energy consumption is the same for both types of catalyst. The balance between the various emissions is much more optimal according to the invention than if a single catalyst is used.

From the example it appears that the two-stage catalyst is an attractive alternative if the total emission of hydrocarbons, carbon monoxide and nitrogen oxides is considered.

## Claims

1. A method for cleaning off-gases which contain organic nitrogen compounds, by catalytic combustion in the presence of excess molecular oxygen at elevated temperature, using two catalysts, wherein the off-gases are first passed through a catalyst bed with a metal oxide catalyst and then are passed through a catalyst bed with a noble metal catalyst, and wherein oxidizing conditions prevail in both catalyst beds.

2. A method according to claim 1, wherein the metal oxide catalyst and/or the noble metal catalyst are provided on a support.

3. A method according to claim 1 or 2, wherein the metal oxide is selected from the group consisting of oxides of copper, manganese, tungsten, titanium, chromium, vanadium and iron.

4. A method according to claims 1-3, wherein the noble metal is selected from the group consisting of platinum, palladium, iridium and rhodium.

5. A method according to claims 1-4, wherein as support, metal, silica, alumina, silica-alumina, titania, zirconia, clay and/or zeolite are used.

6. A method according to claims 1-5, wherein the inlet temperature of the off-gas for the metal oxide catalyst lies between 250 and 450°C.

7. A method according to claims 1-6, wherein the inlet temperature for the noble metal catalyst bed lies between 300 and 500°C.

8. A method according to claim 1-7, wherein the temperature rise of the off-gas in the bed of the metal oxide catalyst is sufficient to yield the desired inlet temperature for the noble metal catalyst bed.

9. A method for cleaning off-gases coming from the roasting of coffee, by catalytic combustion in the presence of excess molecular oxygen at elevated temperature, using two catalysts, wherein the off-gases are first passed through a catalyst bed with a metal oxide catalyst and then are passed through a catalyst bed with a noble metal catalyst.
